# EUROPEAN PATENT APPLICATION

(11) **EP 2 784 332 A1**
(43) Date of publication of application: **01.10.2014**
(21) Application number: 13161574.2
(22) Date of filing: 28.03.2013
(51) Int. Cl.: F16B 2/14, F16B 2/22, F16L 3/24, H02G 3/32

(54) **Attachment system**

(71) Applicant: Airbus Operations GmbH, 21129 Hamburg (DE)
(72) Inventor: Sayilgan, Cihangir, 20523 Hamburg (DE); Goehlich, Robert Alexander, 21129 Hamburg (DE); Vichniakov, Alexei, 21614 Buxtehude (DE); Maslennikov, Johannes, 21614 Buxtehude (DE)
(74) Representative: Maiwald Patentanwalts GmbH

(57) **Abstract**

The invention relates to an attachment system for being mounted to a structural element. In particular, the attachment system comprises a bracket and a first wedge. For mounting the attachment system to the structural element, the wedge is attached to a first surface portion of the structural element and the bracket is subsequently placed over a portion of the structural element and the first wedge in a clamping configuration. In said clamping configuration a movement of the bracket is prevented.

## Description

### FIELD OF THE INVENTION

The invention relates to the attachment of system components to a structural element. In particular, the invention relates to an attachment system comprising a bracket and a wedge. Furthermore, the invention also relates to a method for mounting an attachment system to a structural element and to a use of an attachment system.

### BACKGROUND OF THE INVENTION

Currently, an attachment system, for example a cable holder in an aircraft, may be glued or attached to a structural element, e.g., by means of a rivet. Both attachment methods imply a high workload to mount the attachment system.

In particular, for bonding or gluing an attachment system to a structural element the bonding area of the structural element is cleaned and roughened. Subsequently, the glue is applied, the attachment system is positioned, and a pressure is applied to the attachment system for a certain amount of time. Furthermore, until the glue has dried and reached its maximal bonding strength, the attachment system may not be ready to be loaded. Thus, the attachment system may not be used directly after gluing it to the structural element. Moreover, the removal of a glued attachment system may be complicated and time consuming.

Mounting an attachment system to the structural element by means of a rivet also requires a plurality of different steps. First, a hole has to be drilled into the structural element. Subsequently, the attachment element has to be positioned over the hole and the rivet has to be fastened to the structural element as well as the attachment system. This procedure requires different technical instruments and implies a high workload.

In both cases mounting and removing may require an enhanced accessibility and therefore cannot be performed when the attachment system is only hardly accessible.

DE 10 2004 011 186 Al discloses a cable holder made of plastic, with a cable receiver section and a main unit. The fastening section of the main unit is designed to be placed on a surface of a structural element. Moreover, a fastener fixes the cable holder to the structural element through a recess provided on the fastening section.

US 7,635,108 B2 relates to a holding system which is designed to be attached to a structural element by means of a fastener, for example a rivet.

### SUMMARY OF THE INVENTION

It is an object of the present invention to provide for an improved attachment system which is easy and fast to install.

This and further objects are achieved by the subject-matters of the independent claims. Further embodiments are set out in the respective dependent claims and the following description.

According to an embodiment of the present invention an attachment system is proposed. The attachment system comprises a bracket including a base portion, a first flange attached to the base portion and a second flange attached to the base portion. Furthermore, the attachment system comprises a first wedge, wherein the first wedge is adapted to be attached to a first surface area of a structural element. Attachment of the first wedge to the first surface area of the structural element may be achieved by glue, one or more rivets, or screws. Moreover, the bracket is adapted to enclose at least a portion of the structural element and at least a portion of the first wedge in a clamping configuration. In said clamping configuration, the first flange of the bracket is in mechanical contact with the first wedge and the wedge is adapted for preventing a movement of the bracket in a first direction.

The bracket may comprise a receiving section for receiving an object to be attached to the structural element, for example a receiving section for receiving an electric or optical cable, a wire, a pipe, or an interior element such as an interior furnishing element of a passenger cabin. The receiving section may for example be attached to the base portion of the bracket. Different bracket models with different receiving sections are provided such that the attachment system of the present invention can be used for attaching different object to a structural element.

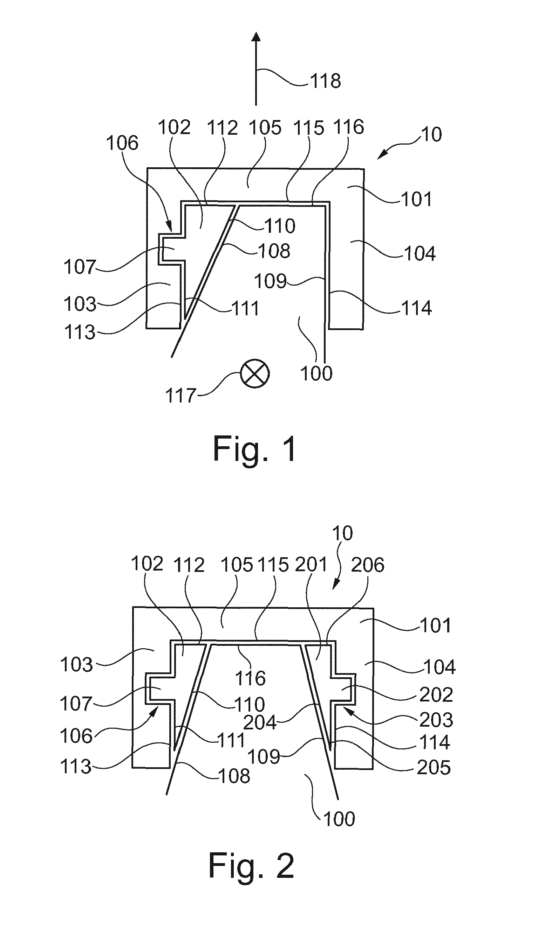

The structural element may be any structural element of a means of transport or of an industrial plant, for example an open or a closed primary or secondary structural element of an aircraft or a spacecraft, e.g., a stringer or a frame a fuselage. For example, an open structural element refers to a structural element with a T-profile. A closed structural element is for example shown in Figs. 1 to 7. In particular, the structural element may comprise a portion over which portion the bracket may be placed such that, in the clamping configuration, the portion of the structural element is located between the first and the second flange of the bracket.

For the attachment system to be in the clamping configuration, the first wedge is attached to the first surface area of the structural element and the bracket is placed, snapped, or slid over at least a portion of the structural element and at least a portion of the first wedge. For example, the first wedge is glued to the first surface area of the structural element. In the clamping configuration, the movement of the bracket in the first direction is prevented by the mechanical contact between the structural element and the first wedge as well as between the first wedge and the first flange. The first wedge may be a standardized component which is attached to the structural element with a standardized tool or instrument.

For example, the mechanical contact causes static frictional forces, dynamic frictional forces, and adhesive forces. Thus, the movement of the bracket is prevented by the bracket clamping the first wedge and the structural element or by the glue attaching the first wedge to the structural element.

In other words, the first flange of the bracket applies a first force on the wedge. Consequently, the first wedge applies a second force on the structural element, the first and second forces being directed to an inside of the structural element. When a load or a force is applied to the bracket in the first direction the first force applied from the flange to the first wedge and the second force applied from the first wedge to the structural element results in a frictional forces between the first flange and the first wedge as well as between the first wedge and the structural element preventing the movement of the bracket in the first direction.

The wedges and the bracket of the attachment system may be manufactured from different materials such as injection molding plastic. The wedges may be manufactured from a different material than the bracket. For example, the wedge may be injected directly on the structural element. In that case, the wedge is manufactured from a fast curing, moldable material.

An advantage of the attachment system of the present invention is that the work load involved for attaching said attachment system is small. In particular, no special tools are required for attaching said attachment system. For example, glue may be already applied to the first wedge, e.g., in form of an adhesive foil. Furthermore, the attachment system may also be attached to areas that are difficult to access. Moreover, since the clamping pressure of the first flange of the bracket onto the wedge results in frictional forces between the first flange and the first wedge as well as between the first wedge and the structural element, the bracket may be placed over the portion of the structural element and the portion of the wedge before the glue has dried and reached its maximal bonding strength. A load may also be applied to the bracket before the glue has reached its maximal bonding strength since the frictional forces from the clamping configuration prevent a movement of the bracket in the first direction.

According to another embodiment of the invention, the attachment system is adapted to be attached to an elongated structural element and the first direction, in which direction the movement of the bracket is prevented, is substantially perpendicular to a direction defined by the elongation of the structural element.

In other words, the structural element extends substantially along a first direction in space and the first direction is perpendicular to the direction of the elongation of the structural element. Thus the structural element extends more along the direction of the elongation of the structural element than along the other directions in space. For example, the structural element may be a stringer, a frame segment, or a beam.

According to a further embodiment of the invention, the second flange of the bracket is adapted to be in mechanical contact with a second surface area of the structural element in the clamping configuration.

For example, as an effect of the clamping of the bracket, the second flange of the bracket applies a third force to the structural element, the third force being directed to the inside of the structural element. When a load in the first direction is applied to the bracket, the third force applied from the second flange to the structural element results in frictional forces between the second flange and the structural element preventing the movement of the bracket in the first direction.

According to another embodiment of the invention, the first wedge of the attachment system comprises a first surface adapted to be attached to the first surface area of the structural element, a second surface adapted to be in mechanical contact with the first flange of the bracket in the clamping configuration, and a third surface. Furthermore, the first surface of the wedge and the second surface of the wedge enclose a first angle, which first angle is smaller than 90°. For example, the first angle lies in a range between 25° and 50°. Moreover, the first angle is configured such that, in the clamping configuration, the second surface of the wedge is substantially parallel to the first flange.

In other words, the wedge comprises a triangular cross-section, one side of the triangular cross-section being configured for being attached to the first surface area of the structural element. For example, the wedge may be configured as a equilateral triangle or as an acute triangle.

Moreover, the first wedge is configured to complete the angle between the first surface portion of the structural element and the first flange of the bracket. In other words, the first wedge substantially fills out the volume between the first surface area of the structural element and the first flange such that forces are transmitted from the first flange to the first surface area of the structural element. However, the first wedge may comprise recesses such that not the complete volume between the structural element and the first flange is filled by the first wedge.

According to a further embodiment of the invention, the first wedge of the attachment system comprises a first pin and the first flange of the bracket comprises a first recess to receive the first pin of the first wedge in the clamping configuration.

In other words, when the bracket is placed over the portion of the structural element and a portion of the first wedge, the first pin of the first wedge is located on an inside of the first recess of the first flange. The first pin may be designed as a portion of the first wedge that emerges from the remaining portion of the first wedge. For example, the first pin is a surface portion of the second surface of the first wedge emerging from the remaining surface of the second surface. For example, the first recess is designed as a hole in the first flange having the same shape as the first pin such that the first recess seamlessly receives the first pin.

An advantage resulting from said first pin and first recess is that, in the clamping configuration, the mechanical contact between the first wedge and the first flange is supported. In particular, the first pin which is received by the first recess supports the frictional force between the first flange and the first wedge when the load or force is applied to the bracket in the first direction. In other words, the first pin holds the first flange back. Moreover, the first pin prevents for example a declamping of the bracket due to vibrations of the structural element.

According to another exemplary embodiment of the invention, the first flange and the base portion of the bracket are substantially perpendicular to each other. Furthermore, the second flange and the base portion of the bracket are substantially perpendicular to each other.

In other words, the angles enclosed by the first flange and the base portion as well as by the second flange and the base portion both are substantially 90°.

According to a further exemplary embodiment of the invention, the base portion and the first flange enclose a second angle, which second angle is smaller than 90°. For example, the second angle lies in a range between 50° and 75°. Furthermore, the wedge comprises a first surface adapted to be attached to the first surface area of the structural element and a second surface adapted to be in mechanical contact with the first flange of the bracket in the clamping configuration. Moreover, the first surface of the wedge and the second surface of the wedge enclose a first angle, which first angle is smaller than 90°. For example, the first angle lies in a range between 50° and 75°. The first angle and the second angle are configured such that, in the clamping configuration, the second surface of the wedge is substantially parallel to the first flange.

In other words, the minimal distance between the lower portion of the first surface of the first flange and the second surface of the second flange is smaller than the minimal distance between the upper portion of the first surface of the first flange and the second surface of the second flange. The lower portion refers to the portion being located the furthest away from the base portion. Equally, the upper portion refers to the portion close to the base portion. As an effect, in the clamping configuration, the movement of the bracket in the first direction is prevented, since the first wedge and the portion of the structural element do not fit through the lower opening of the bracket, the lower opening referring to the opening defined by the lower portions of the first surface of the first flange and of the second surface of the second flange. Moreover, when a force in the first direction is applied to the bracket the first flange of the bracket exerts a force on the first wedge which is directed to the inside of the structural element. Consequently, the first wedge is pressed against the structural element and the frictional force between the structural element and the first wedge is enhanced. Thus, the geometrical shape of the bracket supports the clamping effect of the bracket.

According to another exemplary embodiment of the invention, the first wedge comprises a first surface adapted to be attached to the first surface area of the structural element, a second surface, a third surface, and a barb. In particular, the first surface and the second surface enclose a first angle smaller than 90°. For example, the first angle lies in a range between 50° and 75°. Furthermore, the first flange of the bracket comprises a fourth surface, a fifth surface, and a first recess. Moreover, in the clamping configuration, the second surface of the first wedge is adapted to be in mechanical contact with the fourth surface of the first flange and the first recess is adapted to receive the barb.

In particular, the minimal distance between the lower portion of the fourth surface of the first flange and the second flange is smaller than the minimal distance between the upper portion of the fourth surface of the first flange and the second surface of the second flange. As an effect, in the clamping configuration, the movement of the bracket in the first direction is prevented, since the first wedge and the portion of the structural element do not fit through the lower opening of the bracket, the lower opening referring to the opening defined by the lower portion of the fourth surface of the first flange and the lower portion of the second surface of the second flange. Moreover, when a force in the first direction is applied to the bracket the fourth surface of the first flange exerts a force onto the first wedge which is directed to the inside of the structural element. Consequently, the first wedge is pressed against the structural element and the frictional force between the structural element and the first wedge is enhanced. Moreover, since the first flange comprises a first recess which recess receives the barb in the clamping configuration, the barb prevents the movement of the bracket in the first direction.

For example, the barb is designed as a sharp-edged portion emerging from the first wedge between the second surface and the third surface of the first web, the barb located between the second and the third surface of the first wedge, and the first recess being located between the third and the fourth surface of the first flange. According to a further embodiment of the invention, the attachment system further comprises a pin element. Said pin element is adapted to be attached to the structural element. Furthermore, the second flange of the bracket comprises a second recess and, in the clamping configuration, the second recess of the second flange receives the pin element.

The pin element is adapted to be attached to the opposite of the first wedge. Thus, in the clamping configuration, the structural element is located between the first wedge and the pin element. When the bracket is placed over the portion of the structural element and a portion of the first wedge, the pin element is located on an inside of the second recess of the second flange. For example, the second recess is designed as a hole in the second flange having the same shape as the pin element such that the second recess seamlessly receives the pin element.

Consequently, the pin element holds back the bracket when a force in a first direction is applied to the bracket and thus prevents the movement of the bracket in the first direction.

According to another exemplary embodiment of the invention, the attachment system further comprises a second wedge. Said second wedge is adapted to be attached to a second surface area of a structural element. Furthermore, the bracket is adapted to enclose at least a portion of the second wedge in the clamping configuration. Moreover, in the clamping configuration, the second flange of the bracket is in mechanical contact with the second wedge.

By providing an attachment system with a first and a second wedge, the attachment system can be attached to structural elements having different shapes. The first wedge fills the space between the first flange of the bracket and the first surface portion of the structural element and the second wedge fills the space between the second flange of the bracket and the second surface portion of the structural element. Using two wedges may also improve the clamping functionality of the attachment system since the flux of the forces in the bracket is optimized by the mechanical contact with two wedges.

According to a further exemplary embodiment of the invention, the bracket of the attachment system comprises a first bracket element and a second bracket element, wherein the first bracket element comprises the first flange and the second bracket element comprises the second flange. Furthermore, the first bracket element and the second bracket element are configured to be attached together by means of an attachment element.

Thus, the bracket is assembled together when attaching the bracket to the portion of the structural element and the portion of the first wedge. In other words, the clamping configuration of the bracket is achieved when the first bracket element and the second bracket element are attached together.

According to another embodiment of the invention, the first wedge of the attachment system is adapted to be glued to the first surface area of the structural element. For example, the glue is already applied to the first surface of the first wedge in form of an adhesive foil.

According to a further embodiment of the invention, a method for mounting an attachment system to a structural element is presented. In particular, the method comprises the step of attaching a first wedge to a first surface area of a structural element. Furthermore, the method includes the step of placing a bracket over at least a portion of the structural element and at least a portion of the first wedge in a clamping configuration. The bracket comprises a base portion, a first flange attached to the base portion, and a second flange attached to the base portion. Furthermore, in the clamping configuration, the bracket partially encloses the portion of the structural element such that the first flange of the bracket is in mechanical contact with the first wedge and the first wedge prevents a movement of the bracket in a first direction.

For example, attaching the first wedge to the structural element is performed in a different stage of the assembly than attaching the bracket to the structural element. In particular, the first wedge may be attached to the structural element in an early stage of the assembly when the accessibility to the structural element is ensured. The bracket may then be attached to the structural element and the first wedge in a later stage of the assembly, for example when wires or interior elements are attached to the structural element. Moreover, the first wedge can be attached to the structural element also when the exact type of bracket and receiving section is unknown.

In another embodiment of the present invention, the first wedge is glued to the structural element and the bracket is placed over the portion of the structural element when the glue has not yet reached its maximal bonding strength.

In other words, when attaching an attachment system to a structural element, one does not have to wait until the glue has dried and reached its maxima bonding strength. The movement of the bracket in the first direction is also prevented when the glue has not reached its maximal bonding strength because of the clamping functionality of the bracket, i.e., because of the frictional forces between the first wedge and the structural element as well as the frictional forces between the first wedge and the first flange. In a later stage, when the glue has reached its maximal bonding strength, the bonding forces further support the frictional forces. Moreover, in case the clamping of the bracket should decrease, the bonding forces of the glue still prevent a movement of the bracket in the first direction.

A further embodiment of the present invention discloses an use of an attachment system for attaching a wire, a pipe, or an interior element to a structural element of a means of transport or an industrial plant.

For example, the structural element may be an open or a closed primary or secondary structural element of an aircraft. The attachment system may be mounted in an aircraft, a launch vehicle, a satellite, a space station module, due to the easy handling and pre-installation potential. Moreover it may be mounted in a ship, a bus, and a train. Furthermore, the attachment system may be mounted in a stationary facility such as an industrial plant, e.g., a wind plant.

### BRIEF DESCRIPTION OF THE DRAWINGS

Fig. 1 is a schematic cross-section of an attachment system attached to a structural element according to an exemplary embodiment of the invention.
Fig. 2 is a schematic cross-section of an attachment system attached to a structural element according to another exemplary embodiment of the invention.
Fig. 3 is a schematic cross-section of an attachment system attached to a structural element according to another exemplary embodiment of the invention.
Fig. 4 is a schematic cross-section of an attachment system attached to a structural element according to another exemplary embodiment of the invention.
Fig. 5 is a schematic drawing of a structural element with two wedges according to another exemplary embodiment of the invention.
Fig. 6 is a schematic drawing of an attachment system attached to a structural element according to another exemplary embodiment of the invention.
Fig. 7 is a schematic drawing of an attachment system attached to a structural element according to another exemplary embodiment of the invention.
Fig. 8 shows a flowchart according to an exemplary embodiment of the invention.
Fig. 9 is a drawing of an aircraft according to an exemplary embodiment of the invention.
Fig. 10 is a drawing of an industrial plant according to an exemplary embodiment of the invention.

Exemplary embodiments of the invention will be described in the following drawings. Any reference signs in the claims should not be construed as limiting the scope of the claims.

### DETAILED DESCRIPTION OF EMBODIMENTS

Figs. 1 to 4 show four different exemplary embodiments of an attachment system 10 attached to a structural element 100. In all embodiments the attachment system comprises a first wedge 102 and a bracket 101.

Fig. 1 shows a cross-section of a first exemplary embodiment of an attachment system 10 which is attached to a structural element 100. In particular, the attachment system 10 comprises a bracket 101 as well as a first wedge 102. The first wedge 102 comprises a first surface 110, a second surface 111, and a third surface 112. In this first embodiment, the first surface 110 and second surface 111 enclose an angle of about 30°. Furthermore, the second surface 111 and the third surface 112 are substantially perpendicular to each other. Said first wedge 102 is attached to the structural element 100 such that the first surface 110 of the first wedge 102 is attached to a first surface area 108 of the structural element 100. For example, the first surface of the first wedge 102 is glued to the first surface area 108 of the structural element 100. Moreover, the first wedge 102 further comprises a first pin 107, which pin emerges from the second surface 111 of the first wedge 102.

The bracket 101 comprises a base portion 105 as well as a first flange 103 and a second flange 104. The base portion 105 is aligned between the first flange 103 and the second flange 104. In other words, the first flange 103 emerges from a first end of the base portion 105 and the second flange 104 emerges from a second end of the base portion 105. On an inside area, the first flange 103 comprises a first inner surface 113 and the second flange 104 comprises second inner surface 114. Moreover, the base portion 105 comprises an inner surface 115. In addition, the first flange 103 comprises a first recess 106 to receive the first pin 107 of the first wedge 102. The shape of the first recess 106 matches the shape of the first pin 107 such that, in the clamping configuration, the first pin 107 is seamlessly received by the first recess 106.

In this first exemplary embodiment, the bracket 101 is designed such that the first flange 103 extends perpendicularly from the base portion 105 and the second flange 104 also extends perpendicularly from the base portion 105. In other words, the first flange 103 and the second flange 104 are parallel to each other. This design of the first flange 103, the second flange 104 and the base portion 105 defines a U-shaped cross-section. The area between the base portion 105, the first flange 103, and the second flange 104 is referred to as the inside of the bracket. Moreover, the angle between base-portion 105 and first as well as second flanges is not restricted to 90°. Thus, the base portion 105, the first flange 103, and the second flange 104 also define a U-shaped cross-section when the first flange 103 and the second flange 104 are not parallel to each other.

In order to attach the attachment system 10 according to this first exemplary embodiment to the structural element 100 the following steps are performed. First, the first wedge 102 is attached to the structural element 100, for example glued to the structural element 100. In a second step, the bracket is placed or snapped over the structural element 100 and the first wedge 102. By placing or snapping the bracket 101 over the structural element 100 and the first wedge 102, the attachment system 10 is in a clamping configuration. In said clamping configuration, the bracket 101 at least partially encloses the structural element 100 and at least partially encloses the first wedge 102. Moreover, in the clamping configuration, the recess 106 of the first flange 103 receives the first pin 107 of the first wedge 102 and the first inner surface 113 of the first flange 103 is in mechanical contact with the second surface 111 of the first wedge 102. In addition, the second inner surface 114 of the second wedge 104 is in mechanical contact with a second surface portion 109 of the structural element 100 and the third inner surface 115 of the base portion 105 aligns with an upper surface portion 116 of the structural element 100.

In the clamping configuration, a movement of the bracket 101 is prevented. For example, the structural element 100 is elongated and extends along a direction 117 of elongation of the structural element and in the clamping configuration, a movement of the bracket in a first direction 118, which first direction is perpendicular to the direction 117 of elongation of the structural element, is prevented. This is achieved by the fact that in the clamping configuration, frictional forces between the first surface 110 of the first wedge 102 and the first surface portion 108 of the structural element 100, frictional forces between the second surface 111 of the first wedge 102 and the first inner surface 113 of the first flange 103, as well as frictional forces between the second surface portion 109 of the structural element 100 and the second inner surface 114 of the second flange 104 prevent a movement of the bracket 101 in the direction 118. Moreover, the frictional forces are supported by the fact that the first surface 110 of the first wedge 102 is glued to the first surface portion 108 of the structural element 100 and by the fact that the recess 106 of the first flange 103 receives the first pin 107 of the first flange 103. In other words, the first pin 107 holds back the first flange 103. Moreover, in the clamping configuration, the first flange 103 and the second flange 104 of the bracket 101 apply forces directed to an inside of the structural element 100 such that the first wedge 102 is pressed against the structural element 100.

In Fig. 2, a cross-section of an attachment system 10 attached to a structural element 100 according to a second exemplary embodiment is depicted. In particular, the attachment system 10 comprises a bracket 101, a first wedge 102, and a second wedge 201. The first wedge 102 is designed as described in the first exemplary embodiment of Fig. 1. The second wedge 201 comprises a first surface 204, a second surface 205, and a third surface 206. Moreover, the second wedge 201 comprises a second pin 202, which second pin 202 extends from the second surface 205 of the second wedge 201.

The bracket 101 is designed as the bracket 101 of the first exemplary embodiment. In addition, in this second embodiment, the second flange 104 of the bracket 101 comprises a second recess 203 which is adapted to receive the second pin 202 of the second wedge 201.

In order to attach the attachment system 10 according to this second exemplary embodiment to the structural element 100, the first surface 110 of the first wedge 102 is attached to a first surface portion 108 of the structural element 100 and the first surface 204 of the second wedge 201 is attached to a second surface portion 109 of the structural element 100. For example, the first and second wedges 102 and 201 are glued to the structural element 100. In order to obtain the clamping configuration, the bracket 101 is placed or snapped over a portion of the structural element 100 as well as over a portion of the first wedge 102 and a portion of the second wedge 201 such that the first recess 106 of the first flange 103 receives the first pin 107 of the first wedge 102 and the second recess 203 of the second flange 104 receives the second pin 202 of the second flange 201. Thus, in the clamping configuration, the first inner surface 113 of the first flange 103 is in mechanical contact with the second surface 111 of the first wedge 102 and the second inner surface 114 of the second flange 104 is in mechanical contact with the second surface 205 of the second wedge 201.

In the clamping configuration, a movement of the bracket in the first direction 118 is prevented by the frictional forces between the first surface portion 108 of the structural element 100 and the first surface 110 of the first wedge 102, between the first inner surface 103 of the first flange 103 and the second surface 111 of the first wedge 102, between the second surface portion 109 of the structural element 100 and the first surface 204 of the second wedge 201, as well as between the second inner surface 114 of the second flange 104 and the second surface 205 of the second wedge 201. Moreover, the movement of the bracket 101 is prevented by the fact that the first inner surface 110 of the first wedge 102 is glued to the first surface portion 108 of the structural element 100, by the fact that the first surface 204 of the second wedge 201 is glued to the second surface portion 109 of the structural element 100, by the fact that the first recess 106 of the first flange 103 receives the first pin 107 of the first wedge 102, and by the fact that the second recess 203 of the second flange 104 receives the second pin 202 of the second wedge 201.

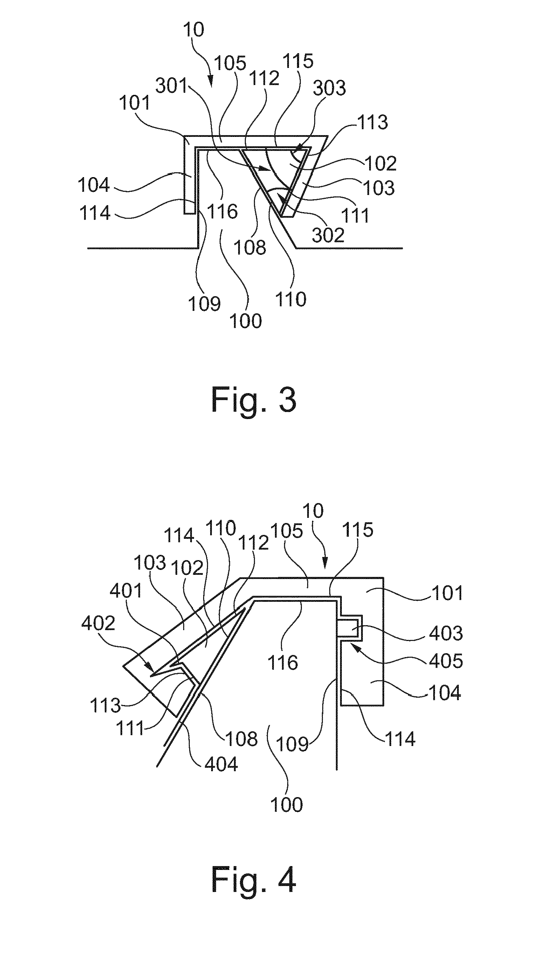

In Fig. 3, a cross-section of an attachment system 10 attached to a structural element 100 according to a third exemplary embodiment of the invention is shown. The attachment system 10 includes a bracket 101 comprising a base portion 105, a first flange 103, and a second flange 104. In contrast to the first and second exemplary embodiments, the base portion 105 and the first flange 103 enclose a second angle 301 which is below 90°. This geometrical arrangement of base portion 105, first flange 103, and second flange 104 also is referred to as U shaped cross-section. In this third exemplary embodiment, the second angle 301 between the base portion 105 and the first flange 103 is approximately 60°. Moreover, the attachment system 10 includes a first wedge 102 comprising a first surface 110, a second surface 111, as well as a third surface 112. The first surface 110 and the second surface 111 of the wedge 102 enclose a first angle 302. In this third exemplary embodiment, the first angle 302 is approximately 60°. Moreover, the second surface 111 and the third surface 112 of the first wedge 102 enclose a third angle 303, which third angle 303 substantially coincides with the first angle 301.

In order to obtain the clamping configuration, the bracket 101 is placed or snapped over a portion of the structural element 100 and a portion of the first wedge 102. As in the first exemplary embodiment, a movement in the direction 118 is prevented in the clamping configuration by the frictional forces between the first surface 110 of the first flange 102 and the first surface portion 108 of the structural element 100, by frictional forces between the first inner surface 113 of the first flange 103 and the second surface 111 of the first wedge 102, and frictional forces between the second inner surface 114 of the second flange 104 and the second surface portion 109 of the structural element 100. Moreover, when a load or a force in the first direction 118 is applied to the bracket 101, the first flange 103 exerts a force on the first wedge 102 which is directed to an inside of the structural element 100 such that the wedge 102 is pressed against the structural element 100 and the frictional forces between the first surface 110 of the first wedge 102 and the first surface portion 108 of the structural element 100 are enhanced.

Fig. 4 shows a schematic cross-section of an attachment system 10 attached to a structural element 100 according to a fourth exemplary embodiment of the present invention. In this fourth exemplary embodiment, the attachment system comprises a bracket 101, a first wedge 102, and a pin element 403.

The first wedge 102 comprises a first side 110, a second side 111, as well as a third side 112. Moreover, the first wedge comprises a barb 401 as well as an elongation 404 of the first side 110. The elongation 404 of the first side 110 allows for a larger surface to attach the first wedge 102 to the structural element. For example, the first wedge 102 comprises a larger area which can be glued to the structural element 101. The angle between the first surface 110 and the second surface 111 of the first wedge 102 is below 90°. Moreover, the angle between the second surface 111 and the third surface 112 is less than 45°. In this fourth exemplary embodiment, the barb 401 is arranged between the second surface 111 and the third surface 112 of the first wedge 102, the barb 401 defining an elongation of the third surface 112 of the first wedge 102. In addition, the third surface 112 of the first wedge 102 is designed to act as a ramp for the first flange 103 of the bracket 101 when the bracket 101 is placed or snapped over the first wedge 102.

The bracket 101 comprises a base portion 105, a first flange 103, and a second flange 104. In this fourth exemplary embodiment, the angle between the first flange 103 and the base portion 105 is between 90° and 180°. In addition, the first flange 103 comprises a first inner surface 113, a fourth inner surface 406, as well as a recess, which recess 402 is arranged between the first inner surface 113 and the fourth inner surface 406. Moreover, the second flange 104 comprises a second recess 405 as well as a second inner surface 114.

In order to obtain the clamping configuration, the first wedge 102 is attached to the structural element 100 such that the first surface 110 and the elongation 404 are attached, for example glued, to the first surface portion 108 of the structural element 100. Furthermore, the pin element 403 is attached, for example glued, to a part of the second surface portion 109 of the structural element 100. Subsequently, the bracket 101 is placed or snapped over at least a portion of the structural element 100, at least a portion of the first wedge 102, and over the pin element 403.

In the clamping configuration, a movement of the bracket 101 in the first direction 118 is prevented by frictional forces between the first surface 110 of the first wedge 102 and the first surface portion 108 of the structural element, between the elongation 404 of the first surface 110 of the first wedge 102 and the first surface portion 108 of the structural element 100, between the second surface 111 of the first wedge 102 and the first inner surface 113 of the first flange 103, between the third surface 112 of the first wedge 102 and the fourth inner surface 406 of the first wedge 103, as well as between the second inner surface 114 of the second flange 104 and the second surface portion 109 of the structural element 100. Moreover, a movement in the direction 118 is prevented by the first barb 401 received by the recess 402 of the first flange 103, by the pin element 403 received by the second recess 405 of the second flange 104. In other words, the barb 401 and the pin element 403 hold back the bracket in the clamping configuration, respectively. Moreover the fact that the first surface 110 as well as the elongation 404 of the first surface 110 are attached, e.g. glued, to the first surface portion 108 of the structural element 100 support that the movement of the bracket 101 in the first direction 118 is prevented.

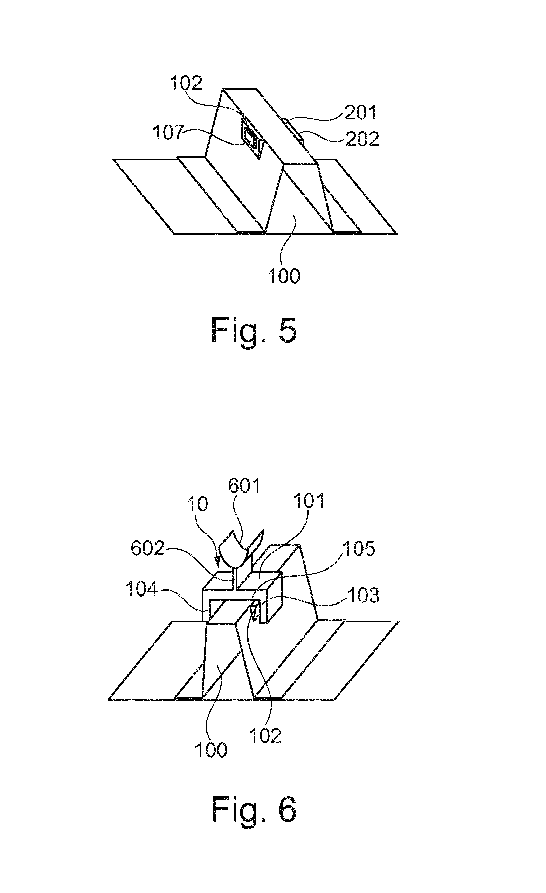

In Fig. 5, a structural element 100 with a first wedge 102 and a second wedge 201 according to the second exemplary embodiment of the invention is depicted in a three-dimensional representation. In particular, the first wedge 102 comprises a first pin 107 and a second wedge 201 comprises a second pin 202. Thus Fig. 5 shows the assembly of the attachment system according to the second exemplary embodiment of the invention before the bracket 101 is placed over the first wedge 102 and the second wedge 201.

The first wedge 102 and the second wedge 201 are both attached to the structural element 100 such that the first wedge 102 and the second wedge 201 are located on opposite sides of the structural element 100. For example, the first wedge 102 and the second wedge 201 are glued to the structural element 100.

Fig. 6 shows an attachment system 10 attached to a structural element 100 according to the first exemplary embodiment of the present invention in a three-dimensional representation. In particular, the attachment system 10 comprises a first wedge 102 and a bracket 101 with a first flange 103 and a second flange 104 as well as with a base portion 105 there between. Furthermore, the bracket 101 comprises a receiving section 601, e.g., for receiving cables or wires. The receiving section 601 is attached to the base portion 105 of the bracket by means of a joint member 602. The receiving section 601 may also be adapted to receive other objects such as interior elements of a passenger cabin. Thus, the receiving section 601 may have different geometrical shapes adapted to the object received by the receiving section 601.

The first wedge 102 is attached to the structural element 100, e.g. glued. Moreover, the bracket 101 is placed or snapped over at least a portion of the structural element 100 and over at least a portion of the first wedge 102 such that the first flange 103 is in mechanical contact with the first wedge 102 and a second flange 104 is in mechanical contact with a surface portion of the structural element 100.

In particular, Fig. 6 shows the attachment system 10 in a clamping configuration such that a movement of the bracket in the first direction 118 is prevented.

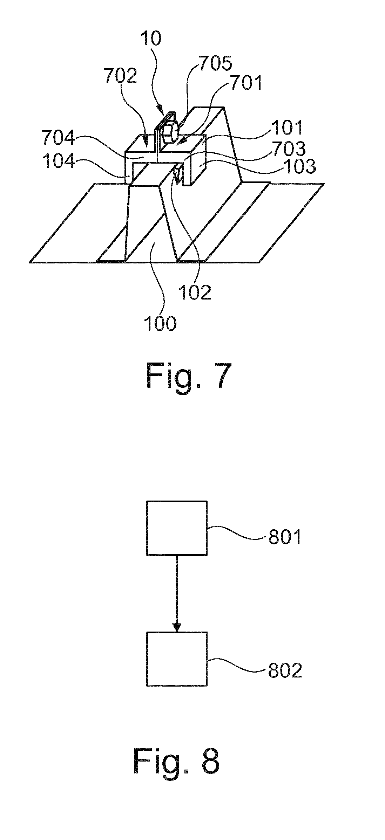

Fig. 7 shows an attachment system 10 attached to a structural element 100 according to a further exemplary embodiment of the present invention. In particular, the attachment system 10 comprises a bracket 101 with a first bracket segment 701 and a second bracket segment 702. The first bracket segment 701 includes a first base portion 703 and a first flange 103 and the second bracket segment includes a second base portion 701 and a second flange 104. Both bracket segments are attached together in the clamping configuration by means of an attachment element 705, for example a screw. Moreover, the attachment system comprises a first wedge 102 which is attached, for example glued, to the structural element 100.

In this exemplary embodiment of the present invention, the bracket is placed over at least a portion of the structural element 100 and over at least a portion of the first wedge 102 by placing the first bracket segment 701 over at least a first portion of the structural element 100 and over at least a portion of the first wedge 102 and by placing the second bracket segment 702 over at least a second portion of the structural element 100. Subsequently, the first bracket segment 701 and the second bracket segment 702 are attached together by means of the attachment element 705. When the first bracket segment 701 and the second bracket segment 702 are attached together by means of the attachment element 705, the bracket 101 is in the clamping configuration such that a movement in the first direction 118 is prevented.

Fig. 8 shows a flowchart of a method for mounting an attachment system 10 to a structural element 100 according to an exemplary embodiment of the present invention.

In a step 801, a first wedge 102 is attached, e.g. glued, to a first surface portion 108 of a structural element 100. The step 801 may be repeated such that further wedges are attached to the structural element 100.

In a further step 802, the bracket 101 is placed or snapped over at least a portion of the structural element and at least a portion of the first wedge 102. In particular, step 802 can be applied when the glue between the first wedge 102 and the structural element 100 has not yet reached its maximal bonding strength. Thus, it may not be necessary to wait until the glue has dried until the bracket can be loaded.

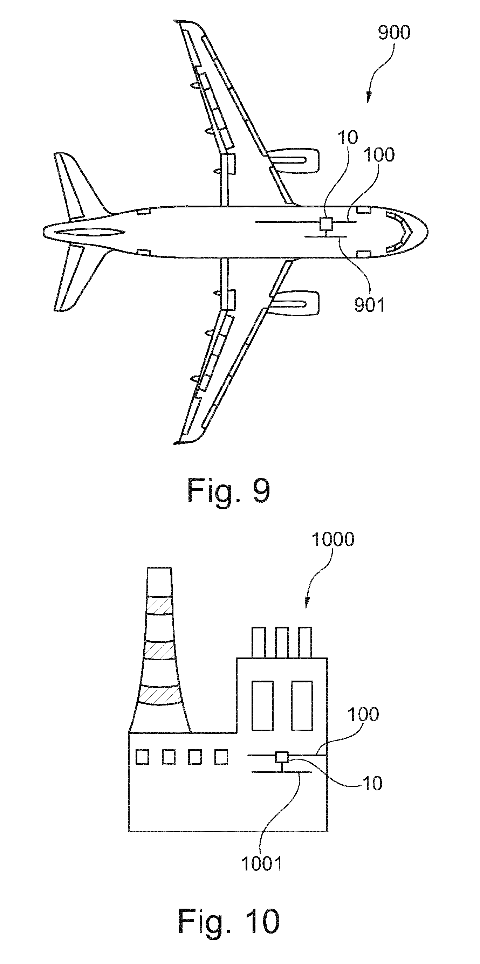

Fig. 9 shows an aircraft 900 according to a further exemplary embodiment of the invention. The aircraft 900 comprises a structural element 100, e.g. a stringer. Furthermore, an attachment system 10 is mounted to the stringer 100, the attachment system 10 holding a cable 901.

Fig. 10 shows an industrial plant 1000 according to a further exemplary embodiment of the present invention. The industrial plant 1000 comprises a structural element, e.g. a beam. Furthermore, an attachment system 10 is mounted to the beam 100, the attachment system 10 holding a pipe 1001.

Whilst the invention has been illustrated and described in detail in the drawings and in the above description, such illustrations and descriptions are intended to be merely illustrative or examples are non-restrictive, so that the invention is not restricted by the disclosed embodiments. Other variations of the disclosed embodiments can be understood and accomplished by a person skilled in the art by implementing the claimed invention from a study of the drawings from the disclosure and from the appended claims.

In the claims, the word "comprising "does not exclude other members or steps and the indefinite article "a" does not exclude a plurality.

The mere fact that particular features or elements are specified in different dependent claims or embodiments does not restrict the subject-matter of the invention. Any combination of said features or embodiments may also be used advantageously.

## Claims

1. Attachment system (10), comprising:
a bracket (101) comprising a base portion (105), a first flange (103) attached to the base portion (105), and a second flange (104) attached to the base portion (105);
a first wedge (102);
wherein the first wedge (102) is adapted to be attached to a first surface area (108) of a structural element (100);
wherein the bracket (101) is adapted to enclose at least a portion of the structural element (100) and at least a portion of the first wedge (102) in a clamping configuration;
wherein, in the clamping configuration, the first flange (103) of the bracket (101) is in mechanical contact with the first wedge (102); and
wherein, in the clamping configuration, the wedge (102) is adapted for preventing a movement of the bracket (101) in a first direction.

2. Attachment system (10) according to claim 1,
wherein the structural element (100) is an elongated structural element (100);
and
wherein the first direction is substantially perpendicular to the elongation of the structural element (100).

3. Attachment system (10) according to claims 1 or 2,
wherein, in the clamping configuration, the second flange (104) of the bracket (101) is adapted to be in mechanical contact with a second surface area (109) of the structural element (100).

4. Attachment system (10) according to any one of the preceding claims,
wherein the first wedge (102) comprises a first surface (110) adapted to be attached to the first surface area (108) of the structural element (100), a second surface (111) adapted to be in mechanical contact with the first flange (103) of the bracket (10) in the clamping configuration, and a third surface (112);
wherein the first surface (110) of the wedge (102) and the second surface (111) of the wedge (102) enclose a first angle (302), which first angle (302) is smaller than 90°;
wherein the first angle (302) is configured such that, in the clamping configuration, the second surface (111) of the wedge (102) is substantially parallel to the first flange (103).

5. Attachment system (10) according to any one of the preceding claims,
wherein the first wedge (201) comprises a first pin (107);
wherein the first flange (103) of the bracket (101) comprises a first recess (106) to receive the first pin (107) of the first wedge (102) in the clamping configuration.

6. Attachment system (10) according to any one of the preceding claims,
wherein the first flange (103) and the base portion (105) of the bracket (101) are substantially perpendicular to each other; and
wherein the second flange (104) and the base portion (105) of the bracket (101) are substantially perpendicular to each other.

7. Attachment system (10) according to one of claims 1 to 5,
wherein the base portion (105) and the first flange (103) enclose a second angle (301), which second angle (301) is smaller than 90°;
wherein the wedge (102) comprises a first surface (110) adapted to be attached to the first surface area (108) of the structural element (100) and a second surface (111) adapted to be in mechanical contact with the first flange (103) of the bracket (10) in the clamping configuration;
wherein the first surface (110) of the wedge (102) and the second surface (111) of the wedge (102) enclose a first angle (302), which first angle (302) is smaller than 90°;
wherein the first angle (302) and the second angle (301) are configured such that, in the clamping configuration, the second surface (111) of the wedge (102) is substantially parallel to the first flange (103).

8. Attachment system (10) according to one of claims 1 to 5,
wherein the first wedge (102) comprises a first surface (110) adapted to be attached to the first surface area (108) of the structural element (100), a second surface (111), a third surface (112) and a barb (401);
wherein the first surface (110) and the second surface (111) enclose a first angle (302), which first angle (302) is smaller than 90°;
wherein the first flange (103) of the bracket (101) comprises a fourth surface (113), a fifth surface (114), and a first recess (402);
wherein, in the clamping configuration, the second surface (111) of the first wedge (102) is adapted to be in mechanical contact with the fourth surface (113) of the first flange (103), and the first recess (402) is adapted to receive the barb (401).

9. Attachment system (10) according to any one of the preceding claims, further comprising:
a pin element (403) being adapted to be attached to the structural element (100);
wherein the second flange (104) of the bracket comprises a second recess (405);
wherein, in the clamping configuration, the second recess (405) of the second flange (104) receives the pin element (403).

10. Attachment system (10) according to any one of the preceding claims, further comprising:
a second wedge (201);
wherein the second wedge (201) is adapted to be attached to a second surface area (109) of a structural element (100);
wherein the bracket (101) is adapted to enclose at least a portion of the second wedge (201) in the clamping configuration;
wherein, in the clamping configuration, the second flange (104) of the bracket (101) is in mechanical contact with the second wedge (201).

11. Attachment system (10) according to any one of the preceding claims,
wherein the bracket (101) comprises a first bracket element (701) and a second bracket element (702);
wherein the first bracket element comprises the first flange (103) and the second bracket element comprises the second flange (104);
wherein the first bracket element (701) and the second bracket element (702) are configured to be attached together by means of an attachment element (705).

12. Attachment system (10) according to any one of the preceding claims,
wherein the first wedge (102) is adapted to be glued to the first surface area (108) of the structural element (100).

13. Method for mounting an attachment system (10) to a structural element (100), comprising the steps:
attaching a first wedge (102) to a first surface area (108) of a structural element (100);
placing a bracket (101) over at least a portion of the structural element (100) and at least a portion of the first wedge (102) in a clamping configuration, the bracket (101) comprising a base portion (105), a first flange (103) attached to the base portion (105), and a second flange (104) attached to the base portion (105);
wherein, in the clamping configuration, the bracket (101) partially encloses the portion of the structural element (101) such that the first flange of the bracket is in mechanical contact with the first wedge;
wherein, in the clamping configuration, the first wedge (102) prevents a movement of the bracket (101).

14. Method according to claim 13, wherein the first wedge (102) is glued to the structural element and wherein the bracket (101) is placed over the portion of the structural element (100) when the glue has not reached its maximal bonding strength.

15. Use of an attachment system (10) according to one of claims 1 to 12 for attaching a wire, a pipe, or an interior element to a structural element (100) of a means of transport or an industrial plant.
